# EUROPÄISCHE PATENTANMELDUNG

(11) **EP 4 321 380 A1**
(43) Veröffentlichungstag der Anmeldung: **14.02.2024**
(21) Anmeldenummer: 23186129.5
(22) Anmeldetag: 18.07.2023
(51) Int. Cl.: B60N 3/04

(54) **FUSSMATTENBEFESTIGUNG**

(30) Priorität: 08.08.2022 DE 102022208235
(71) Anmelder: Gottlieb Binder GmbH & Co. KG, 71088 Holzgerlingen (DE)
(72) Erfinder: POULAKIS, Konstantinos, 71157 Hildrizhausen (DE); HEEPE, Lars, 72072 Tübingen (DE)
(74) Vertreter: Kohler Schmid Möbus Patentanwälte

(57) **Zusammenfassung**

Die Erfindung betrifft eine Fußmattenanordnung (14) mit einer Bodeneinheit (16) und einer auf der Bodeneinheit (16) befestigbaren Fußmatte (18). Die Fußmatte (18) ist mittels einer Klettverbindung an der Bodeneinheit (16) befestigbar. Die Klettverbindung weist ein erstes Klettelement (24a) auf, das stoffschlüssig, insbesondere durch eine Schweißverbindung (28), an der Bodeneinheit (16) befestigt ist. Das erste Klettelement (24a) kann eine Schlingenware (36) aufweisen. Das erste Klettelement (24a) ist vorzugsweise auf einem Aufsatz befestigt. Der Aufsatz und/oder ein Teppich (22) kann/können auf einem Bodenelement (26) der Bodeneinheit (16), insbesondere stoffschlüssig, befestigt sein. Die Erfindung betrifft weiterhin ein Fahrzeug mit einer solchen Fußmattenanordnung (14) sowie ein Verfahren zur Herstellung der Bodeneinheit (16) einer solchen Fußmattenanordnung (14).

## Beschreibung

### Hintergrund der Erfindung

Die Erfindung betrifft eine Fußmattenanordnung für ein Fahrzeug, insbesondere für ein Personenkraftfahrzeug, vorzugsweise für den Fußraum des Fahrers eines Personenkraftfahrzeugs. Die Fußmattenanordnung weist eine Bodeneinheit mit einem an der Oberseite der Bodeneinheit befestigten ersten Klettelement auf. Die Fußmattenanordnung weist weiterhin eine Fußmatte mit einem an der Unterseite der Fußmatte befestigten zweiten Klettelement auf. Die Klettelemente korrespondieren zueinander, d.h. sie sind so aufeinander abgestimmt, dass die Fußmatte durch eine zwischen dem ersten Klettelement und dem zweiten Klettelement ausbildbare Klettverbindung an der Bodeneinheit befestigbar ist.

Die Erfindung betrifft weiterhin ein Fahrzeug mit einer solchen Fußmattenanordnung sowie ein Verfahren zur Herstellung einer Bodeneinheit einer solchen Fußmattenanordnung.

Es ist bekannt, eine Fußmatte auf die zuvor beschriebene Art und Weise in einem Fahrzeug zu befestigen.

Aus der gattungsgemäßen DE 82 21 629 U1 ist eine rahmenförmige Einfassung bekannt geworden, die mit Teppichmaterial verschweißt und/oder durch eine Klettverbindung mit dem Teppichmaterial verbunden sein kann. In die rahmenförmige Einfassung ist eine Absatzplatte eingelegt und durch ein Klettband mit dem Teppichmaterial verbunden. Eine sichere Befestigung der Absatzplatte auf dem Teppichmaterial wird jedoch nur im Zusammenspiel mit der rahmenförmigen Einfassung erreicht, die bei entfernter Absatzplatte einen unvollständigen Eindruck erzeugt.

Die US 2017/0072823 A1, US 5,215,348 A, KR 20-0204204 Y1 und DE 89 11 331 U1 offenbaren in einen Fußraum einlegbare Fußmatten, wobei die Fußmatten über Klettverschluss austauschbare Teile aufweisen. Die austauschbaren Teile dienen der Zierde oder als auswechselbare Verschleißteile.

Schließlich sind aus der EP 3 925 770 A2 allgemein verschiedene Oberflächenbedeckungen bekannt geworden, die über Klettverbindungen fixiert werden.

Um eine Fußmatte leicht reinigen zu können, soll sie schnell und einfach aus dem Fahrzeug entnehmbar sein. Im in das Fahrzeug eingelegten Zustand soll sie demgegenüber insbesondere im Fußraum des Fahrers sicher fixiert sein, um eine Beeinträchtigung von Pedalen durch eine verrutschte Fußmatte zu verhindern. Darüber hinaus soll der Fußraum auch bei entnommener Fußmatte optisch ansprechend und einheitlich wirken und die Befestigung der Fußmatte im Fußraum soll auf konstruktiv einfache Art und Weise sowie kostengünstig realisierbar sein. Trotz mannigfaltiger bekannter Möglichkeiten der Fußmattenanbindung wurde bislang keine Lösung bekannt, die alle vorgenannten Kriterien erfüllt.

### Aufgabe der Erfindung

Es ist daher Aufgabe der Erfindung, eine Fußmattenanordnung bereit zu stellen, die auf einfache, optisch ansprechende und zuverlässige Art und Weise die Befestigung einer Fußmatte ermöglicht. Es ist weiterhin Aufgabe der Erfindung, ein Fahrzeug mit einer solchen Fußmattenanordnung sowie ein Verfahren zur Herstellung einer Bodeneinheit für eine solche Fußmattenanordnung bereit zu stellen.

### Beschreibung der Erfindung

Diese Aufgabe wird erfindungsgemäß gelöst durch eine Fußmattenanordnung gemäß Anspruch 1, ein Fahrzeug gemäß Anspruch 12 und ein Verfahren gemäß Anspruch 13. Die abhängigen Ansprüche geben bevorzugte Weiterbildungen wieder.

Die Aufgabe wird auf überraschend einfache Art und Weise durch eine eingangs beschriebene Fußmattenanordnung gelöst, bei der das erste Klettelement stoffschlüssig an der Bodeneinheit befestigt ist.

Unter einer stoffschlüssigen Verbindung wird insbesondere eine thermische Fügeverbindung und/oder eine Klebeverbindung verstanden. Die stoffschlüssige Verbindung ermöglicht eine dauerhaft zuverlässige Anbindung des ersten Klettelements, und somit auch der Fußmatte, an der Bodeneinheit.

Die hier verwendeten Angaben "oben", "unten", "auf", "unter" etc. beziehen sich auf den vollständig installierten Zustand der Fußmattenanordnung, insbesondere in einem Fahrzeug.

Auch das zweite Klettelement kann stoffschlüssig an der Fußmatte befestigt sein.

Vorzugsweise ist das erste Klettelement durch eine Schweißverbindung auf der Bodeneinheit befestigt.

In besonders bevorzugter Ausgestaltung der Erfindung sind sowohl die Bodeneinheit als auch das erste Klettelement zumindest im Bereich der Schweißverbindung aus Kunststoff ausgebildet. Dies ermöglicht die Ausbildung einer durch Hochfrequenzschweißen, insbesondere durch Ultraschallschweißen, erzeugten Schweißverbindung. Das erste Klettelement und die Bodeneinheit können vollständig aus Kunststoff ausgebildet sein.

Die Bodeneinheit kann ein Bodenelement und einen Aufsatz aufweisen, wobei der Aufsatz insbesondere stoffschlüssig auf dem Bodenelement befestigt ist. Der Aufsatz kann durch eine Schweißverbindung auf dem Bodenelement befestigt sein. Das erste Klettelement ist stoffschlüssig auf dem Aufsatz befestigt, vorzugsweise durch eine Schweißverbindung. Vorzugsweise sind sowohl der Aufsatz als auch das Bodenelement zumindest im Bereich der Schweißverbindung aus Kunststoff ausgebildet. Die Verwendung eines Aufsatzes ermöglicht die stoffschlüssige Anbindung des ersten Klettelements "offline", d.h. vorgelagert zur Fahrzeugmontage. Der Aufsatz mit dem bereits daran befestigten ersten Klettelement kann der Fahrzeugherstellung als vorgefertigtes Fahrzeugteil bereitgestellt werden.

Die Bodeneinheit kann einen Teppich aufweisen, der zumindest bei entfernter Fußmatte von oben her sichtbar ist. Die Bodeneinheit kann vollständig in Form des Teppichs ausgebildet sein. Das erste Klettelement kann unmittelbar auf dem Teppich befestigt sein.

Der Teppich kann im Bereich des ersten Klettelements ausgespart sein. Vorzugsweise ist das erste Klettelement jedoch, wie zuvor erwähnt, unmittelbar auf dem Teppich befestigt. Der Teppich kann beispielsweise auf einem Bodenelement der Bodeneinheit befestigt sein.

In weiterer Ausgestaltung der Fußmattenanordnung ist der Aufsatz auf dem Bodenelement befestigt und der Teppich im Bereich des Aufsatzes ausgespart. Vorzugsweise ist der Teppich jedoch nicht ausgespart, sondern der Aufsatz ist auf dem Teppich befestigt. Die Befestigung des Aufsatzes auf dem Teppich kann stoffschlüssig, insbesondere durch eine Schweißverbindung, erfolgen.

Um auch bei entfernter Fußmatte einen optisch möglichst ansprechenden Fußraum zu erhalten, kann die Farbgebung, Höhe und/oder Struktur des Teppichs der Farbgebung, Höhe und/oder Struktur des ersten Klettelements entsprechen. Unter einer einheitlichen Höhe des Teppichs und des ersten Klettelements wird dabei verstanden, dass die nach oben weisenden Spitzen bzw. freien Enden des Teppichs und des ersten Klettelements im Wesentlichen eine Ebene bilden. Die Höhe des ersten Klettelements berücksichtigt somit den ggf. vorhandenen Aufsatz.

Bei der Fußmattenanordnung kann
a) das erste Klettelement hakenförmige Elemente und/oder pilzförmige Elemente aufweisen und das zweite Klettelement korrespondierende hakenförmige Elemente, pilzförmige Elemente und/oder Schlingenware aufweisen; und/oder
b) das zweite Klettelement hakenförmige Elemente und/oder pilzförmige Elemente aufweisen und das erste Klettelement korrespondierende hakenförmige Elemente, pilzförmige Elemente und/oder Schlingenware aufweisen.

Vorzugsweise weist das erste Klettelement Schlingenware und das zweite Klettelement korrespondierende hakenförmige und/oder pilzförmige Elemente auf. Hierdurch wirkt die Bodeneinheit bei entnommener Fußmatte optisch ansprechend, insbesondere wenn die Bodeneinheit den Teppich aufweist.

Die Schlingenware kann gewebt, gestrickt und/oder gewirkt sein. Die Schlingenware kann an einem Substrat des ersten Klettelements bzw. zweiten Klettelements gehalten sein.

Das erste Klettelement und/oder das zweite Klettelement kann/können Polyester, Polyamid, Polyolefin, recyceltes Polymer, Biopolymer und/oder ein thermoplastisches Elastomer aufweisen.

Um das Recycling der Fußmattenanordnung zu erleichtern, kann die Schlingenware sortenrein aus einem Polymer (mit anderen Worten einem einzigen Typ von Polymer) bestehen. Besonders bevorzugt besteht/bestehen das erste Klettelement und/oder das zweite Klettelement sortenrein aus einem Polymer.

Die erfindungsgemäße Aufgabe wird weiterhin gelöst durch ein Fahrzeug mit einer hier beschriebenen Fußmatte. Das Fahrzeug ist vorzugsweise in Form eines Kraftfahrzeugs, insbesondere in Form eines Personenkraftwagens, ausgebildet. Die Fußmattenanordnung ist vorzugsweise im Fußraum des Fahrers vorgesehen.

Die erfindungsgemäße Aufgabe wird weiterhin gelöst durch ein Verfahren zur Herstellung einer hier beschriebenen Bodeneinheit für eine Fußmattenanordnung, wobei das erste Klettelement stoffschlüssig auf die Bodeneinheit aufgebracht wird.

Das erste Klettelement wird vorzugsweise durch Schweißen, insbesondere Hochfrequenzschweißen, vorzugsweise Ultraschallschweißen, auf die Bodeneinheit aufgebracht. Hierdurch kann die Verbindung zwischen erstem Klettelement und Bodeneinheit sowohl zuverlässig als auch kostengünstig ausgebildet werden.

Bei der Herstellung der Bodeneinheit wird das erste Klettelement vorzugsweise auf den Aufsatz aufgebracht, bevor der Aufsatz auf das Bodenelement oder den Teppich aufgebracht wird. Dies ermöglicht die Ausbildung der stoffschlüssigen Anbindung des ersten Klettelements vor der Montage der Fahrzeugteile zu einem Fahrzeug.

Weitere Vorteile der Erfindung ergeben sich aus der Beschreibung und der schematischen Zeichnung. Die vorstehend genannten und die noch weiter ausgeführten Merkmale können erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1: zeigt eine perspektivische Ansicht eines Teils eines Fahrzeugs mit einer Fußmattenanordnung, wobei die Fußmattenanordnung eine Bodeneinheit und eine auf der Bodeneinheit fixierte Fußmatte aufweist.
- Fig. 2: zeigt eine perspektivische Ansicht des Fahrzeugs mit der Fußmattenanordnung gemäß Fig. 1 bei entfernter Fußmatte.
- Fig. 3: zeigt eine Schnittansicht der Fußmattenanordnung entlang der Linie A-A aus Fig. 1.
- Fig. 4: zeigt eine Schnittansicht der Fußmattenanordnung entlang der Linie B-B aus Fig. 1.
- Fig. 5: zeigt eine Schnittansicht einer alternativen Ausführungsform einer Fußmattenanordnung entlang der Linie A-A aus Fig. 1.
- Fig. 6: zeigt eine Schnittansicht einer alternativen Ausführungsform einer Fußmattenanordnung entlang der Linie B-B aus Fig. 1.

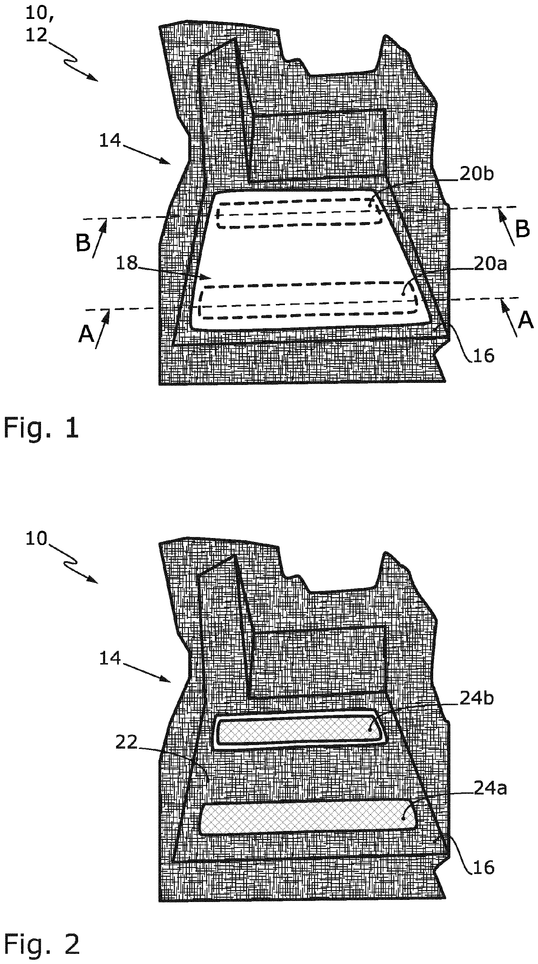

**Fig. 1** zeigt ein Fahrzeug **10,** von dem vorliegend nur ein Fußraum **12** dargestellt ist, hier im Bereich des Fahrers des Fahrzeugs 10. Das Fahrzeug 10 weist eine Fußmattenanordnung **14** mit einer Bodeneinheit **16** und einer Fußmatte **18** (in Fig. 1 weiß gefüllt dargestellt) auf. Die Fußmatte 18 ist durch Klettverbindungen **20a, 20b** (in Fig. 1 gestrichelt umrahmt dargestellt) an der Bodeneinheit 16 befestigt. Die Fußmatte 18 soll zu ihrer Reinigung leicht aus dem Fußraum 12 herausgenommen werden können. Gleichzeitig müssen die Klettverbindungen 20a, b jedoch die Fußmatte 18 im eingelegten Zustand sicher fixieren, um ein versehentliches Verschieben der Fußmatte 18 an ein Pedal (nicht gezeigt) des Fahrzeugs 10 und somit ein Verklemmen beim Betätigen des Pedals zu vermeiden.

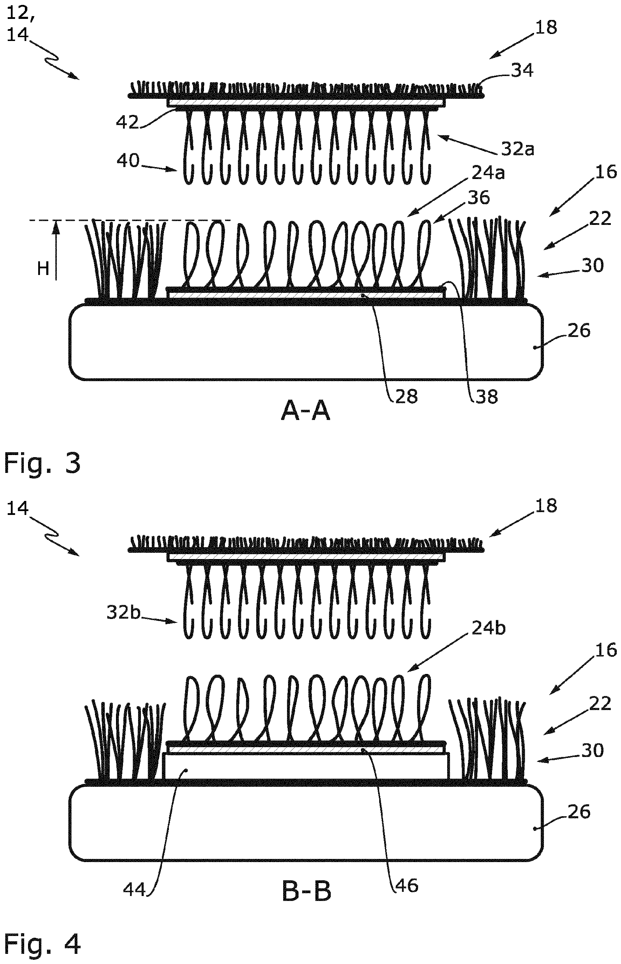

**Fig. 2** zeigt das Fahrzeug 10 mit der Fußmattenanordnung 14 gemäß Fig. 1, jedoch bei entnommener Fußmatte 18. Die Bodeneinheit 16 weist einen Teppich **22** auf. Aus Fig. 2 ist ersichtlich, dass die Bodeneinheit 16 erste Klettelemente **24a, 24b** (in Fig. 2 kariert gefüllt dargestellt) aufweist. Insbesondere die Befestigung der ersten Klettelemente 24a, b wird in verschiedenen Varianten aus den nachfolgend beschriebenen Fign. 3 bis 6 ersichtlich.

**Fig. 3** zeigt die Fußmattenanordnung 14 mit der Bodeneinheit 16 und der Fußmatte 18 im Schnitt A-A gemäß Fig. 1. Die Bodeneinheit 16 weist ein Bodenelement **26,** insbesondere aus Kunststoff, auf. Der Teppich 22 ist auf dem Bodenelement 26 befestigt, insbesondere aufgeklebt. Das erste Klettelement 24a ist stoffschlüssig, insbesondere durch eine Schweißverbindung **28,** am Teppich 22 befestigt. Die Schweißverbindung 28 wurde durch Hochfrequenzschweißen erzeugt. Die Schweißverbindung 28 ermöglicht ein zuverlässiges Fixieren des ersten Klettelements 24a im Fußraum 12. Zur Ausbildung einer besonders zuverlässigen Schweißverbindung 28 können Teppichfasern **30** im Bereich der Schweißverbindung 28 gekürzt oder - wie in Fig. 3 dargestellt - entfernt sein.

Ein dem ersten Klettelement 24a korrespondierendes zweites Klettelement **32a** ist an der Fußmatte 18 befestigt. Vorzugsweise ist das zweite Klettelement 32a, wie in Fig. 3 dargestellt, an der Fußmatte 18 angeschweißt. Die Fußmatte 18 kann an ihrer Oberseite Fußmattenfasern **34** aufweisen.

Das erste Klettelement 24a weist eine Schlingenware **36** auf. Die Schlingenware 36 kann an einem Substrat **38** des ersten Klettelements 24a gehalten sein. Die Schlingenware 36 und/oder das Substrat 38 des ersten Klettelements 24a kann/können aus einem Kunststoff ausgebildet sein. Vorzugsweise wird hierbei Polyester, Polyamid, Polyolefin, recyceltes Polymer, Biopolymer und/oder ein thermoplastisches Elastomer verwendet. Um ein sortenreines Recycling des ersten Klettelements 24a zu ermöglichen, ist die Schlingenware 36 vorzugsweise aus demselben Kunststoff ausgebildet wie das Substrat 38 des ersten Klettelements 24a. Besonders bevorzugt bestehen auch der Teppich 22 und/oder das Bodenelement 26 aus demselben Kunststoff wie das erste Klettelement 24a.

Das zweite Klettelement 32a weist hakenförmige Elemente **40** auf. Die hakenförmigen Elemente 40 können an einem Substrat **42** des zweiten Klettelements 32a angeordnet sein. Die hakenförmigen Elemente 40 und/oder das Substrat 42 des zweiten Klettelements 32a kann/können aus einem Kunststoff ausgebildet sein. Vorzugsweise wird hierbei Polyester, Polyamid, Polyolefin, recyceltes Polymer, Biopolymer und/oder ein thermoplastisches Elastomer verwendet. Um ein sortenreines Recycling des zweiten Klettelements 32a zu ermöglichen, sind die hakenförmigen Elemente 40 vorzugsweise aus demselben Kunststoff ausgebildet wie das Substrat 42 des zweiten Klettelements 32a. Weiter bevorzugt ist das zweite Klettelement 32a aus demselben Kunststoff ausgebildet wie das erste Klettelement 24a.

Grundsätzlich könnte die Kombination aus Schlingenware 36 und hakenförmigen Elementen 40 auch vertauscht angeordnet sein, sodass das erste Klettelement 24a hakenförmige Elemente und das zweite Klettelement 32a Schlingenware aufweist. Der in Fig. 3 gezeigte Fall wird jedoch bevorzugt, um ein einheitlicheres Erscheinungsbild des Fußraums 12 bei entfernter Fußmatte 18 zu erreichen. Die Schlingenware 36 kann dabei in ihrer Form, Farbe und/oder Höhe **H** der Form, Farbe und/oder Höhe H des Teppichs 22 entsprechen.

**Fig. 4** zeigt die Fußmattenanordnung 14 mit der Bodeneinheit 16 und der Fußmatte 18 im Schnitt B-B gemäß Fig. 1. Aus Fig. 4 ist ersichtlich, dass das erste Klettelement 24b mittelbar mit dem Bodenelement 26 verbunden ist. Auf dem Bodenelement 26 ist der Teppich 22 befestigt, insbesondere geschweißt und/oder geklebt. Auf dem Teppich 22 ist ein Aufsatz **44** der Bodeneinheit 16 befestigt, hier geschweißt und/oder geklebt. Zur Ausbildung einer besonders zuverlässigen Verbindung zwischen dem Teppich 22 und dem Aufsatz 44 können Teppichfasern 30 im Bereich der Verbindung gekürzt oder - wie in Fig. 4 dargestellt - entfernt sein.

Der Aufsatz 44 ist vorzugsweise aus Kunststoff ausgebildet. Das erste Klettelement 24b ist stoffschlüssig, insbesondere durch eine Schweißverbindung **46,** auf den Aufsatz 44 aufgebracht. Das erste Klettelement 24b ist mit einem korrespondierenden zweiten Klettelement 32b verbindbar.

Das erste Klettelement 24b steht über den Teppich 22 vor. Dadurch kann das Einrichten der Klettverbindung 20a, b (siehe Fig. 1) zwischen der Fußmatte 18 und der Bodeneinheit 16 über die Klettelemente 32b, 24b erleichtert werden.

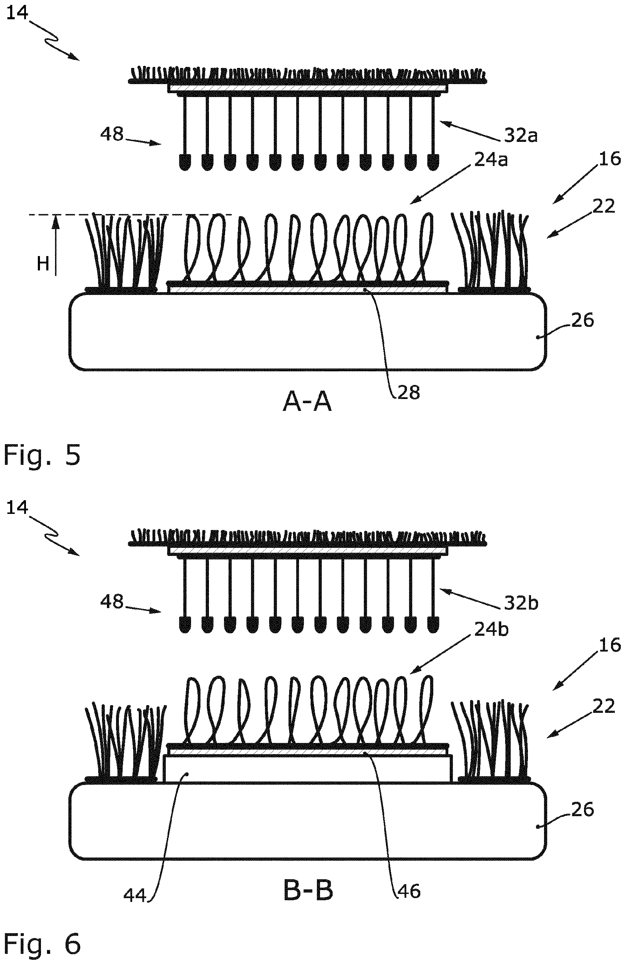

In **Fig. 5** ist eine Variante einer Fußmattenanordnung 14 in der Ansicht gemäß Fig. 3 dargestellt. Ein erstes Klettelement 24a ist dabei stoffschlüssig, hier durch eine Schweißverbindung 28, unmittelbar an einem Bodenelement 26 der Bodeneinheit 16 befestigt. Ein Teppich 22 ist im Bereich des ersten Klettelements 24a ausgespart. Die Höhe H des ersten Klettelements 24a entspricht der Höhe H des Teppichs 22.

Ein zweites Klettelement 32a weist pilzförmige Elemente **48** auf. Das Material der pilzförmigen Elemente 48 kann dem Material der zu Fig. 3 beschriebenen hakenförmigen Elemente 40 entsprechen.

**Fig. 6** zeigt eine Variante einer Fußmattenanordnung 14 in der Ansicht gemäß Fig. 4. Ein erstes Klettelement 24b ist dabei stoffschlüssig, hier durch eine Schweißverbindung 46, an einem Aufsatz 44 befestigt. Der Teppich 22 ist im Bereich des Aufsatzes 44 ausgespart. Der Aufsatz 44 ist unmittelbar an einem Bodenelement 26 der Bodeneinheit 16 befestigt. Ein zweites Klettelement 32b weist analog zu der in Fig. 5 beschriebenen Variante pilzförmige Elemente 48 auf.

Unter Vornahme einer Zusammenschau aller Figuren der Zeichnung betrifft die Erfindung zusammenfassend eine Fußmattenanordnung 14 mit einer Bodeneinheit 16 und einer auf der Bodeneinheit 16 befestigbaren Fußmatte 18. Die Fußmatte 18 ist mittels einer Klettverbindung 20a, b an der Bodeneinheit 16 befestigbar. Die Klettverbindung 20a, b weist ein erstes Klettelement 24a, b auf, das stoffschlüssig, insbesondere durch eine Schweißverbindung 28, 46, an der Bodeneinheit 16 befestigt ist. Das erste Klettelement 24a, b kann eine Schlingenware 36 aufweisen. Das erste Klettelement 24a, b ist vorzugsweise auf einem Aufsatz 44 befestigt. Der Aufsatz 44 und/oder ein Teppich 22 kann/können auf einem Bodenelement 26 der Bodeneinheit 16, insbesondere stoffschlüssig, befestigt sein. Die Erfindung betrifft weiterhin ein Fahrzeug 10 mit einer solchen Fußmattenanordnung 14 sowie ein Verfahren zur Herstellung der Bodeneinheit 16 einer solchen Fußmattenanordnung 14.

### Bezugszeichenliste

- 10: Fahrzeug
- 12: Fußraum des Fahrzeugs 10
- 14: Fußmattenanordnung
- 16: Bodeneinheit
- 18: Fußmatte
- 20a, b: Klettverbindung zwischen Bodeneinheit 16 und Fußmatte 18
- 22: Teppich
- 24a, b: erstes Klettelement an der Bodeneinheit 16
- 26: Bodenelement
- 28: Schweißverbindung zwischen Bodenelement 26 und erstem Klettelement 24a
- 30: Teppichfasern
- 32a, b: zweites Klettelement
- 34: Fußmattenfasern
- 36: Schlingenware
- 38: Substrat des ersten Klettelements 24a, b
- 40: hakenförmige Elemente
- 42: Substrat des zweiten Klettelements 32a, b
- 44: Aufsatz
- 46: Schweißverbindung zwischen Aufsatz 44 und erstem Klettelement 24b
- 48: pilzförmige Elemente

- H: absolute Höhe des Teppichs 22 bzw. der Schlingenware 36

## Patentansprüche

1. Fußmattenanordnung (14) für ein Fahrzeug (10), wobei die Fußmattenanordnung (14) Folgendes aufweist:
- eine Bodeneinheit (16);
- ein erstes Klettelement (24a, b) an der Oberseite der Bodeneinheit (16);
- eine Fußmatte (18);
- ein zweites Klettelement (32a, b) an der Unterseite der Fußmatte (18); wobei das zweite Klettelement (32a, b) mit dem ersten Klettelement (24a, b) korrespondiert, sodass die Fußmatte (18) durch eine Klettverbindung (20a, b) zwischen dem ersten Klettelement (24a, b) und dem zweiten Klettelement (32a, b) an der Bodeneinheit (16) befestigbar ist,
**dadurch gekennzeichnet,**
**dass** das erste Klettelement (24a, b) stoffschlüssig an der Bodeneinheit (16) befestigt ist.

2. Fußmattenanordnung nach Anspruch 1, bei der das erste Klettelement (24a, b) durch eine Schweißverbindung (28) auf die Bodeneinheit (16) aufgebracht ist.

3. Fußmattenanordnung nach einem der vorhergehenden Ansprüche, bei der die Bodeneinheit (16) ein Bodenelement (26) und einen Aufsatz (44) aufweist, wobei der Aufsatz (44) mittelbar oder unmittelbar auf dem Bodenelement (26) befestigt ist und wobei das erste Klettelement (24a, b) stoffschlüssig auf dem Aufsatz (44) befestigt ist.

4. Fußmattenanordnung nach einem der vorhergehenden Ansprüche, bei der die Bodeneinheit (16) einen nach oben weisenden Teppich (22) aufweist.

5. Fußmattenanordnung nach Anspruch 4, bei der der das erste Klettelement (24a, b) unmittelbar auf dem Teppich (22) befestigt ist.

6. Fußmattenanordnung nach Anspruch 5 in Verbindung mit Anspruch 3, bei der der Teppich (22) auf dem Bodenelement (26) befestigt ist und der Aufsatz (44) auf dem Teppich (22) befestigt ist.

7. Fußmattenanordnung nach einem der Ansprüche 4 bis 6, bei der die Farbgebung und/oder Struktur des Teppichs (22) der Farbgebung und/oder Struktur des ersten Klettelements (24a, b) entspricht/entsprechen.

8. Fußmattenanordnung nach einem der vorhergehenden Ansprüche, bei der das erste Klettelement (24a, b) Schlingenware (36) aufweist und das zweite Klettelement (32a, b) korrespondierende hakenförmige und/oder pilzförmige Elemente (40, 48) aufweist.

9. Fußmattenanordnung nach Anspruch 8, bei der die Schlingenware (36) gewebt, gestrickt und/oder gewirkt ist.

10. Fußmattenanordnung nach einem der vorhergehenden Ansprüche, bei der das erste Klettelement (24a, b) und/oder das zweite Klettelement (32a, b) Polyester, Polyamid, Polyolefin, recyceltes Polymer, Biopolymer und/oder ein thermoplastisches Elastomer aufweist/aufweisen.

11. Fußmattenanordnung nach einem der vorhergehenden Ansprüche, bei der das erste Klettelement (24a, b) und/oder das zweite Klettelement (32a, b) sortenrein aus einem Polymer besteht/bestehen.

12. Fahrzeug (10) mit einer Fußmattenanordnung (14) nach einem der Ansprüche 1 bis 11.

13. Verfahren zur Herstellung einer Bodeneinheit (16) für eine Fußmattenanordnung (14) nach einem der Ansprüche 1 bis 11, bei dem das erste Klettelement (24a, b) stoffschlüssig auf die Bodeneinheit (16) aufgebracht wird.

14. Verfahren nach Anspruch 13, bei dem das erste Klettelement (24a, b) durch Hochfrequenzschweißen auf die Bodeneinheit (16) aufgebracht wird.

15. Verfahren nach Anspruch 13 oder 14, in Verbindung mit Anspruch 3, bei dem das erste Klettelement (24a, b) auf den Aufsatz (44) aufgebracht wird, bevor der Aufsatz (44) mittelbar oder unmittelbar auf das Bodenelement (26) aufgebracht wird.
